# EUROPÄISCHE PATENTSCHRIFT

(11) **EP 1 430 943 B1**
(45) Veröffentlichungstag und Bekanntmachung des Hinweises auf die Patenterteilung: **12.04.2006**
(21) Anmeldenummer: 03028066.3
(22) Anmeldetag: 08.12.2003
(51) Int. Cl.: B01D 53/94, F01N 3/08

(54) **Vorrichtung zur Nachbehandlung von Abgasen einer Brennkraftmaschine**
Apparatus for after-treatment of exhaust gases of an internal combustion engine
Dispositif de post-traitement des gaz d'échappement d'un moteur à combustion interne

(30) Priorität: 17.12.2002 DE 10258850
(43) Veröffentlichungstag der Anmeldung: 23.06.2004
(73) Patentinhaber: Volkswagen AG, 38436 Wolfsburg (DE)
(72) Erfinder: Zillmer, Michael Dr., 38173 Sickte (DE); Pott, Ekkerhard Dr., 38518 Grifhorn (DE); Etzrodt, Thomas, 38553 Wasbüttel (DE); Frank, Andreas, 38162 Cremlingen (DE)
(74) Vertreter: Pohlmann, Bernd Michael

(56) Entgegenhaltungen:
- EP-A- 1 031 708
- EP-A- 1 186 757
- DE-A- 10 048 580
- DE-A- 10 140 502
- US-A- 5 979 159
- US-A1- 2002 000 089

## Beschreibung

Die Erfindung betrifft eine Vorrichtung zur Nachbehandlung von Abgasen einer Brennkraftmaschine nach dem Oberbegriff des Anspruchs 1.

Magerlauffähige Ottomotoren können in einem begrenzten Betriebsbereich mit einem hohen Luftüberschuss betrieben werden und weisen dabei einen deutlich niedrigeren Kraftstoffverbrauch auf als konventionelle Ottomotoren. Für die Abgasreinigung bei derartigen Brennkraftmaschinen werden NOx-Speicherkatalysatoren eingesetzt, die jedoch nur in einem relativ schmalen Abgastemperaturfenster von etwa 250°C bis 550°C ausreichend hohe NOx-Konvertierungsraten aufweisen. Um im Fahrzeugbetrieb den verbrauchsgünstigen Magerbetrieb möglichst uneingeschränkt nutzen zu können, ist es erforderlich, die Temperatur des NOx-Speicherkatalysators in diesem Abgastemperaturfenster zu halten.

Gleichzeitig muss sichergestellt werden, dass die Kühlleistung bei geringen Drehzahlen und Belastungen der Brennkraftmaschine nicht zu hoch wird, um die sogenannte "Light-Off-Temperatur" des NOx-Speicherkatalysators, die für die Aufrechterhaltung ausreichender Dreiwege-Konvertierungsraten notwendig ist, einerseits möglichst schnell nach dem Start der Brennkraftmaschine zu erreichen und andererseits im Schwachlastbetrieb nicht zu schnell wieder zu unterschreiten. Diese Randbedingungen ergeben sich zwingend aus der Forderung, auch zukünftige gesetzliche Schadstoffemissionsgrenzwerte zu erfüllen.

Zudem sollte auch bei möglichst niedrigen Motordrehzahlen und/oder Motorlasten durch die Einleitung von Maßnahmen der Steuerung der Brennkraftmaschine, welche die Abgastemperatur steigern, eine Katalysatorentschwefelung möglich sein.

Weiterhin ist bei der Auslegung von Abgasanlagen darauf zu achten, dass bei sehr hoher Drehzahl und Belastung der Brennkraftmaschine eine ausreichende Wärmemenge abgeführt werden kann, um den NOx-Speicherkatalysator vor thermischer Überhitzung zu schützen.

Um diese unterschiedlichen Anforderungen an die Katalysatortemperatur zu erfüllen, ist bereits vorgeschlagen worden, aktiv schaltbare Kühlstrecken zu verwenden, die zwischen dem üblicherweise eingesetzten Vorkatalysator und dem NOx-Speicherkatalysator angeordnet sind. Damit lassen sich z. B. parallele Strömungswege mit geringer Wärmeabgabe realisieren, indem Abgas durch einen Bypass geleitet wird, oder es ist eine hohe Wärmeabgabe realisierbar, indem Abgas durch einen Abgaskühler geleitet wird. Die Realisierung ist jedoch aufwändig und teuer.

Aus der Offenlegungsschrift DE 199 48 148 A1 ist die Verwendung von passiven Kühlungsmaßnahmen bekannt, bei der eine Luftanströmung der Abgasanlage vorgesehen ist. Eine vor dem NOx-Speicherkatalysator angeordnete Kühlstrecke muss dabei hinsichtlich der maximal übertragbaren Wärmemenge schwächer ausgelegt werden als bei aktiv schaltbaren Systemen, um dem Zielkonflikt bzgl. maximaler Kühlleistung und frühem Erreichen der Light-Off-Temperatur gerecht zu werden. Auch hier ist die Gestaltung aufwändig. Zusätzlich ist bei beiden bekannten Lösungsprinzipien problematisch, dass die zusätzlich eingebrachten gasführenden Bauteile große thermisch träge Massen darstellen, durch die die Dynamik des Systems verschlechtert wird.

Weiterhin ist aus der DE 100 23 049 A1 bekannt, einen Vorkatalysator mit nachgeschaltetem NOx-Speicherkatalysator so am Ausgang einer Brennkraftmaschine anzuordnen, dass die mittlere Lauflänge des Abgases vom Austritt aus einem Zylinderkopf der Brennkraftmaschine und dem Vorkatalysator höchsten 23 cm beträgt.

Aus der gattungsbildenden Offenlegungsschrift DE 198 54 095 A1 ist eine Vorrichtung zur Nachbehandlung von Abgasen bekannt, bei der das Abgas bei kalter Brennkraftmaschine in einer separaten Abgasleitung geführt ist, die mittels eines Strömungssperrelements steuerbar ist. Zur verbesserten Nachbehandlung ist ein Dreiwegekatalysator möglichst nahe am Ausgang der Brennkraftmaschine angeordnet und ferner ein NOx-Speicherkatalysator stromab des Dreiwegekatalysators mit einer dazwischen liegenden Abgasrohrlänge von mindestens 1,5 m und bevorzugt von mindestens 2,2 m vorgesehen. Die separate Abgasleitung ist mit deutlich geringerem Querschnitt und weitgehender Luftspaltisolierung innerhalb der Abgasleitung zwischen dem Dreiwegekatalysator und dem NOx-Speicherkatalysator geführt. Die Vorrichtung erfordert einen erheblichen Platzbedarf.

Aufgabe der Erfindung ist es, eine einfache und kostengünstige Vorrichtung zur Nachbehandlung von Abgasen von Brennkraftmaschinen zu schaffen, bei der ein ausreichendes Temperaturniveau zur katalytischen Umsetzung von Schadstoffen verfügbar ist und eine ausreichende Wärmemenge abgeführt werden kann, um einen stromab der Brennkraftmaschine angeordneten Katalysator vor Überhitzung zu schützen.

Die Aufgabe wird durch eine Vorrichtung mit den Merkmalen des Anspruchs 1 gelöst.

Ein Vorteil der Vorrichtung besteht in ihrer konstruktiv einfachen Ausbildung. Der Abstand zwischen einem Vorkatalysator und einem Speicherkatalysator wird in einem Bereich eingestellt, welcher ein Optimum hinsichtlich der thermischen Eigenschaften des Gesamtsystems Vorkatalysator - Hauptkatalysator darstellt. Dabei wird ein für die Abgasführung ohnehin vorgesehenes Verbindungsrohrstück als Wärmeübertragerstrecke verwendet.

Bei der erfindungsgemäßen Vorrichtung sind Brennkraftmaschine und die Kühlleistung des Abgassystems in geeigneter Weise aufeinander abgestimmt. Insbesondere bei höheren Fahrzeuggeschwindigkeiten ist damit erreichbar, dass eine obere Temperaturgrenze am Speicherkatalysator nicht zu früh überschritten wird. Gleichzeitig ist auch im Niedriglastbereich der Brennkraftmaschine die Wärmeabfuhr gering genug, dass das zur Konvertierung notwendige Temperaturfenster des Speicherkatalysators eingehalten werden kann.

Weitere Vorteile und günstige Ausgestaltungen der Erfindung sind der Beschreibung und den weiteren Ansprüchen zu entnehmen.

Die Erfindung ist anhand einer Zeichnung näher beschrieben, wobei die Figuren zeigen:
- Fig. 1: eine schematische Darstellung einer bevorzugten Ausgestaltung der erfindungsgemäßen Vorrichtung und
- Fig. 2: eine schematische Darstellung einer bevorzugten Ausgestaltung mit einem mehrflutigen Zwischenstück.

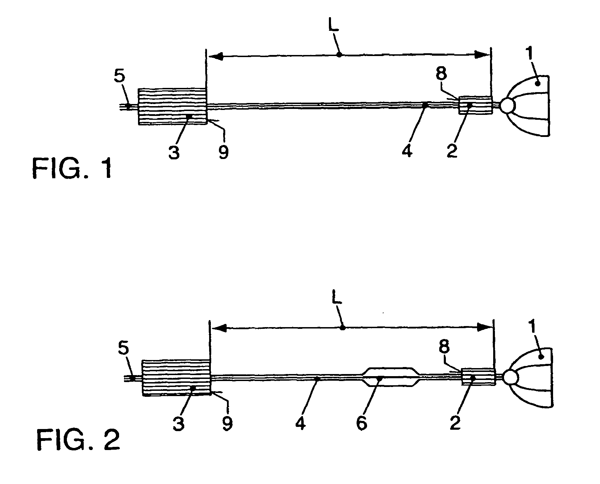

In Fig. 1 ist eine bevorzugte Ausgestaltung der erfindungsgemäßen Vorrichtung zur Nachbehandlung von Abgasen einer Brennkraftmaschine vereinfacht schematisch dargestellt. In einer Abgasführung stromab der nicht dargestellten Brennkraftmaschine ist ein erster Vorkatalysator 2 und stromab von diesem ein Hauptkatalysator 3 vorgesehen. Abgas aus der Brennkraftmaschine gelangt über Leitungen 1 in den Vorkatalysator 2, wird dort vorgereinigt und über ein Verbindungsrohrstück 4 dem Speicherkatalysator 3 zugeführt. Das gereinigte Abgas verlässt den Speicherkatalysator 3 über das Abgasrohr 5. Der Vorkatalysator 2 kann beispielsweise ein Dreiwegekatalysator sein. Bevorzugt ist der Hauptkatalysator 3 ein Speicherkatalysator für Stickoxide NOx. Besonders bevorzugt weist der Speicherkatalysator 3 auch eine Speicherfähigkeit für Schwefel und/oder Schwefelverbindungen auf.

Der Vorkatalysator 2 ist mit dem Hauptkatalysator 3 über ein Verbindungsrohrstück 4 mit einer Länge L verbunden. Die Länge L des Verbindungsrohrstücks 4 wird von den jeweiligen Katalysatorstimflächen 8, 9 eingangsseitig des Vorkatalysators 2 und eingangsseitig des Hauptkatalysators 3 gemessen und auf einen mittleren Stromfaden des Abgasstroms bezogen, der in etwa im Zentrum der Abgasrohrströmung im Verbindungsrohrstück 4 verläuft. Bezogen auf diese Geometrie beträgt die Länge L des Verbindungsrohrstücks 4 mindestens 1400 mm. Günstig ist eine Länge L von mindestens 1500 mm, bevorzugt mindestens 1600 mm, besonders bevorzugt mindestens 1700 mm. Der Bezug auf den mittleren Stromfaden berücksichtigt mögliche Abweichungen von einer linearen Geometrie des Verbindungsrohrstücks 4.

Es zeigt sich überraschenderweise, dass entgegen dem bekannten Stand der Technik eine weitere Vergrößerung des Abstandes zwischen Vorkatatysator 2 und Hauptkatalysator 3 eine Verschlechterung der Eigenschaften der Abgasnachbehandlung mit sich bringt. Dagegen ermöglicht die erfindungsgemäße Vorrichtung auf einfache Weise die Einhaltung der thermischen NOx-Konvertierungsfenster und erlaubt ein schnelles Erreichen der sogenannten Light-Off-Temperatur. Ebenso ist eine Entschwefelung des Hauptkatalysators 3 möglich. Gleichzeitig ist der Hauptkatalysator 3 vor Überhitzung geschützt.

Mit besonderem Vorteil ist die Vorrichtung so ausgestaltet, dass die Abgasführung auf mindestens 90% der Länge L des Verbindungsrohrstücks 4 einflutig geführt ist. Dies begrenzt die Wärmeabfuhr in diesem Bereich auf einen tolerierbaren Wert.

In einer günstigen, nicht gesondert dargestellten Ausgestaltung sind mehrere Vorkatalysatoren 2 strömungsmäßig parallel geschaltet. Die Abgasführung ist vor dem Hauptkatalysator 3 zusammengeführt. Vorteilhaft ist es dann, die Abgasführung mindestens zu 30% der Lauflänge des Abgases zwischen der ausgangsseitigen Katalysatorstirnfläche 8 des Vorkatalysators 2 bis zur Zusammenführung einflutig zu führen. Dies verhindert eine zu starke Wärmeabfuhr.

Vorzugsweise beträgt die geometrische Querschnittsfläche des Verbindungsrohrstücks 4 gemessen in Quadratmillimetern das Zehnfache bis Vierzigfache der Nennleistung der Brennkraftmaschine gemessen in Kilowatt. Ist die Nennleistung der Brennkraftmaschine etwa 50 kW, so liegt eine vorteilhafte Querschnittsfläche des Verbindungsrohrstücks 4 zwischen 500 und 2000 mm², wobei der lichte Querschnitt des Verbindungsrohrstücks 4 betrachtet wird. In diesem Bereich sind Länge des Verbindungsrohrstücks 4 und dessen wärmeabführende Oberfläche, sowie die wärmezuführende Abgasmenge, welche durch den lichten Querschnitt des Verbindungsrohrstücks 4 strömt, über weite Betriebsbereiche der Brennkraftmaschine in einem besonders günstigen Verhältnis.

Dabei ist es zweckmäßig, wenn die Abgasführung in Verbindungsrohrstücken 4 mit annähernd kreisförmigem Querschnitt erfolgt. In dieser Konfiguration ist das Verhältnis von Wärmeabfuhr zu Volumen des Verbindungsrohrstücks 4 günstig. In einer bevorzugten Ausgestaltung hiervon weist das Verbindungsrohrstück 4 zwischen der eingangsseitigen Katalysatorstimfläche 8 des Vorkatalysators 2 bis zur eingangsseitigen Katalysatorstirnfläche 9 des Hauptkatalysators 3 auf einer Lauflänge von mindestens 80% der Länge L des Verbindungsrohrstücks 4 Querschnittsveränderungen von höchstens 5% auf, wobei Querschnittsveränderungen durch die Gehäuse sowie Ausschlusstrichter der Katalysatoren nicht berücksichtigt sein sollen. Vorzugsweise bezieht sich die Querschnittsveränderung auf den inneren, lichten Querschnitt des Verbindungsrohrstücks 4, welcher vom Abgas durchströmt ist. Diese Geometrie ist besonders einfach in der Herstellung, und eine Wärmeabfuhr kann gezielt erhöht sein.

In einer günstigen Weiterbildung der Erfindung sind dem Verbindungsrohrstück 4 zwischen Vorkatalysator 2 und Hauptkatalysator 3 Mittel 6 zur Erhöhung der Wärmeabfuhr zugeordnet. Dies ist in Fig. 2 dargestellt. Im Verbindungsrohrstück 4 ist ein Bereich 6 mit erhöhter Wärmeabfuhr vorgesehen. Es kann z. B. der, vorzugsweise lichte, Querschnitt im Verbindungsrohrstück 4 bereichsweise um mehr als 5% erweitert sein und durch verstärkte Wärmeabfuhr in diesem Bereich die Temperatur vor dem Hauptkatalysator 3 auf für diesen unschädliche Werte begrenzt werden. Die Mittel 6, insbesondere die Querschnittserweiterungen, sind vorteilhaft auf mindestens 10% der Länge L des Verbindungsrohrstücks 4 vorgesehen.

Vorzugsweise sind die Mittel 6 so ausgebildet, dass zumindest die, vorzugsweise äußere, Oberfläche des Verbindungsrohrstücks 4 vergrößert ist. Besonders günstig umfassen die Mittel 6 Verrippungen und/oder Verprägungen der äußeren Oberfläche des Verbindungsrohrstücks 4. So können beispielsweise Kühlrippen an der äußeren Oberfläche des Verbindungsrohrstücks 4 angebracht sein. Dies erlaubt eine gezielte Erhöhung der Wärmeabfuhr in diesem Bereich und gleichzeitig eine einfache Herstellung.

## Patentansprüche

1. Vorrichtung zur Nachbehandlung von Abgasen einer Brennkraftmaschine, bei der in einer Abgasführung stromab der Brennkraftmaschine zumindest ein Vorkatalysator (2) und stromab eines jeden Vorkatalysators (2) ein Hauptkatalysator (3) vorgesehen sind, und Vorkatalysator (2) und Speicherkatalysator (3) mit einem Verbindungsrohrstück (4) verbunden sind, **dadurch gekennzeichnet, dass** die Länge (L) des Verbindungsrohrstücks (4) von den jeweiligen Katalysatorstirnflächen (8, 9) eingangsseitig des Vorkatalysators (2) und eingangsseitig des Speicherkatalysators (3) gemessen und bezogen auf einen mittleren Stromfaden des Abgases in etwa im Zentrum einer Abgasrohrströmung in dem Verbindungsrohrstück (4), in einem Bereich zwischen 1400 mm und 1700 mm liegt und dass die geometrische Querschnittsfläche des lichten Querschnitts des Verbindungsrohrstücks (4) gemessen in Quadratmillimetern das Zehnfache bis Vierzigfache der Nennleistung der Brennkraftmaschine gemessen in Kilowatt beträgt.

2. Vorrichtung nach Anspruch 1, **dadurch gekennzeichnet, dass** die Abgasführung auf mindestens 90% der Länge (L) des Verbindungsrohrstücks (4) einflutig ist.

3. Vorrichtung nach zumindest einem der Anspruch 1 bis 2, **dadurch gekennzeichnet, dass** mehrere Vorkatalysatoren (2) strömungsmäßig parallel geschaltet und vor dem Speicherkatalysator (3) zusammengeführt sind.

4. Vorrichtung nach Anspruch 3, **dadurch gekennzeichnet, dass** die Abgasführung mindestens auf 30% einer Lauflänge (L) des Abgases zwischen der eingangsseitigen Katalysatorstimfläche (8) des Vorkatalysators (2) bis zur Zusammenführung einflutig ist.

5. Vorrichtung nach zumindest einem der Ansprüche 1 bis 4, **dadurch gekennzeichnet, dass** die Abgasführung in Verbindungsrohrstücken (4) mit annähernd kreisförmigem Querschnitt erfolgt.

6. Vorrichtung nach zumindest einem der Ansprüche 1 bis 5, **dadurch gekennzeichnet, dass** die Abgasführung zwischen der eingangsseitigen Katalysatorstimfläche (8) des Vorkatalysators (2) bis zur eingangsseitigen Katalysatorstimfläche (9) des Speicherkatalysators (3) auf einer Lauflänge von mindestens 80% der Länge (L) des Verbindungsrohrstücks (4) Veränderungen des lichten Querschnitts von höchstens 5% aufweist, wobei Querschnittsveränderungen durch die Gehäuse sowie Ausschlusstrichter der Katalysatoren nicht berücksichtigt sein sollen.

7. Vorrichtung nach zumindest einem der Ansprüche 1 bis 6, **dadurch gekennzeichnet, dass** dem Verbindungsrohrstück (4) zwischen Vorkatalysator (2) und Speicherkatalysator (3) Mittel (6) zur Erhöhung der Wärmeabfuhr zugeordnet sind.

8. Vorrichtung nach Anspruch 7, **dadurch gekennzeichnet, dass** der lichte Querschnitt im Verbindungsrohrstück (4) bereichsweise um mehr als 5% erweitert ist.

9. Vorrichtung nach Anspruch 7 oder 8, **dadurch gekennzeichnet, dass** die Mittel (6) so ausgebildet sind, dass die äußere Oberfläche des Verbindungsrohrstücks (4) vergrößert ist.

10. Vorrichtung nach Anspruch 7 oder 9, **dadurch gekennzeichnet, dass** die Mittel (6) auf mindestens 10% der Länge (L) des Verbindungsrohrstücks (4) vorgesehen sind.

11. Vorrichtung nach zumindest einem der Ansprüche 7 bis 10, **dadurch gekennzeichnet, dass** die Mittel (6) Verrippungen und/oder Verprägungen der äußeren Oberfläche des Verbindungsrohrstücks (4) umfassen.

12. Vorrichtung nach zumindest einem der Ansprüche 7 bis 11, **dadurch gekennzeichnet, dass** die Mittel (06) ein mehrflutiges Zwischenstück umfassen.

## Claims

1. Apparatus for the aftertreatment of exhaust gases from an internal combustion engine, in which, in an exhaust section downstream of the internal combustion engine, at least one primary catalytic converter (2) and, downstream of each primary catalytic converter (2), a main catalytic converter (3) are provided, and the primary catalytic converter (2) and storage catalytic converter (3) are connected to a connecting pipe section (4), **characterized in that** the length (L) of the connecting pipe section (4), measured from the respective catalytic converter end faces (8, 9) on the entry side of the primary catalytic converter (2) and the entry side of the storage catalytic converter (3) and based on a middle filament of flow of the exhaust gas approximately in the centre of an exhaust pipe flow in the connecting pipe section (4), is in a range between 1400 mm and 1700 mm, and **in that** the geometric cross-sectional area of the clear cross section of the connecting pipe section (4), measured in square millimetres, is from ten times to forty times the rated power of the internal combustion engine measured in kilowatts.

2. Apparatus according to Claim 1, **characterized in that** the exhaust section comprises a single flow over at least 90% of the length (L) of the connecting pipe section (4).

3. Apparatus according to at least one of Claims 1 to 2, **characterized in that** a plurality of primary catalytic converters (2) are connected in parallel in terms of flow and are combined upstream of the storage catalytic converter (3).

4. Apparatus according to Claim 3, **characterized in that** the exhaust section comprises a single flow at least over 30% of a run length (L) for the exhaust gas between the entry-side catalytic converter end face (8) of the primary catalytic converter (2) up to the point of combination.

5. Apparatus according to at least one of Claims 1 to 4, **characterized in that** the exhaust section uses connecting pipe sections (4) which are approximately circular in cross section.

6. Apparatus according to at least one of Claims 1 to 5, **characterized in that** the exhaust section between the entry-side catalytic converter end face (8) of the primary catalytic converter (2) and the entry-side catalytic converter end face (9) of the storage catalytic converter (3), over a run length of at least 80% of the length (L) of the connecting pipe section (4), has a clear cross section which changes by at most 5%, disregarding changes in cross section caused by the housings and the exclusion funnels of the catalytic converters.

7. Apparatus according to at least one of Claims 1 to 6, **characterized in that** means (6) for increasing the dissipation of heat are assigned to the connecting pipe section (4) between primary catalytic converter (2) and storage catalytic converter (3).

8. Apparatus according to Claim 7, **characterized in that** the clear cross section is widened by more than 5% in regions of the connecting pipe section (4).

9. Apparatus according to Claim 7 or 8, **characterized in that** the means (6) are designed in such a way as to increase the outer surface area of the connecting pipe section (4).

10. Apparatus according to Claim 7 or 9, **characterized in that** the means (6) are provided over at least 10% of the length (L) of the connecting pipe section (4).

11. Apparatus according to at least one of Claims 7 to 10, **characterized in that** the means (6) comprise finned and/or stamped formations on the outer surface of the connecting pipe section (4).

12. Apparatus according to at least one of Claims 7 to 11, **characterized in that** the means (6) comprise a multi-flow intermediate piece.

## Revendications

1. Dispositif de traitement final des gaz d'échappement d'un moteur à combustion interne dans lequel au moins un pré-catalyseur (2) est prévu en aval du conduit de gaz d'échappement du moteur à combustion interne et un catalyseur principal (3) est prévu en aval de chaque pré-catalyseur (2), le pré-catalyseur (2) et le catalyseur à accumulation (3) étant reliés par un tronçon de tube de raccordement (4), **caractérisé en ce que** sur un parcours d'écoulement moyen des gaz d'échappement situé sensiblement au centre de l'écoulement de gaz d'échappement dans le tronçon de tube de raccordement (4), la longueur (L) du tronçon de tube de raccordement (4) entre les surfaces frontales d'entrée (8, 9) du pré-catalyseur (2) et du catalyseur à accumulation (3) est comprise dans la plage de 1 400 mm à 1 700 mm et **en ce que** la superficie géométrique de la section transversale intérieure du tronçon de tube de raccordement (4) mesurée en millimètres carrés correspond à dix fois à quarante fois la puissance nominale du moteur à combustion interne mesurée en kilowatts.

2. Dispositif selon la revendication 1, **caractérisé en ce que** sur au moins 90 % de la longueur (L) du tronçon de tube de raccordement (4), les gaz d'échappement s'écoulent en un seul flux.

3. Dispositif selon au moins l'une des revendications 1 et 2, **caractérisé en ce que** plusieurs pré-catalyseurs (2) sont raccordés en parallèle en termes d'écoulement et sont réunis en amont du catalyseur à accumulation (3).

4. Dispositif selon la revendication 3, **caractérisé en ce que** l'écoulement de gaz d'échappement s'effectue en un seul flux sur au moins 30 % de la longueur (L) d'avancement des gaz d'échappement entre la surface frontale (8) d'entrée du pré-catalyseur (2) et la jonction.

5. Dispositif selon au moins l'une des revendications 1 à 4, **caractérisé en ce que** les gaz d'échappement s'écoulent dans des tronçons de tube de raccordement (4) de section transversale sensiblement circulaire.

6. Dispositif selon au moins l'une des revendications 1 à 5, **caractérisé en ce que** sur au moins 80 % de la longueur (L) du tronçon de tube de raccordement (4) entre la surface frontale (8) d'entrée du pré-catalyseur (2) et la surface frontale (9) d'entrée du catalyseur à accumulation (3), le conduit de gaz d'échappement présente des modifications d'au plus 5 % de sa section transversale intérieure, sans tenir compte des modifications de la section transversale intérieure dues aux boîtiers ainsi qu'aux entonnoirs de raccordement aux catalyseurs.

7. Dispositif selon au moins l'une des revendications 1 à 6, **caractérisé en ce que** des moyens (6) d'augmentation de l'évacuation de chaleur sont associés au tronçon de tube de raccordement (4) situé entre le pré-catalyseur (2) et le catalyseur à accumulation (3).

8. Dispositif selon la revendication 7, **caractérisé en ce que** certaines parties de la section transversale intérieure du tronçon de tube de raccordement (4) sont agrandies de plus de 5 %.

9. Dispositif selon les revendications 7 ou 8, **caractérisé en ce que** les moyens (6) agrandissent la surface extérieure du tronçon de tube de raccordement (4).

10. Dispositif selon les revendications 7 ou 9, **caractérisé en ce que** les moyens (6) sont prévus sur au moins 10 % de la longueur (L) du tronçon de tube de raccordement (4).

11. Dispositif selon au moins l'une des revendications 7 à 10, **caractérisé en ce que** les moyens (6) comprennent des nervurations et/ou des creux ménagés dans la surface extérieure du tronçon de tube de raccordement (4).

12. Dispositif selon au moins l'une des revendications 7 à 11, **caractérisé en ce que** les moyens (6) comprennent une pièce intermédiaire à écoulements multiples.
